(19) Europäisches Patentamt
European Patent Office
Office européen des brevets

(11) **EP 3 426 613 B1**

(12) **FASCICULE DE BREVET EUROPEEN**

(45) Date de publication et mention
de la délivrance du brevet:
**31.07.2024 Bulletin 2024/31**

(21) Numéro de dépôt: **17707353.3**

(22) Date de dépôt: **02.03.2017**

(51) Classification Internationale des Brevets (IPC):
**C03B 18/22** $^{(2006.01)}$     **C03B 25/08** $^{(2006.01)}$
**C03B 29/08** $^{(2006.01)}$

(52) Classification Coopérative des Brevets (CPC):
**C03B 18/22; C03B 25/08; C03B 29/08**

(86) Numéro de dépôt international:
**PCT/EP2017/054928**

(87) Numéro de publication internationale:
**WO 2017/153253 (14.09.2017 Gazette 2017/37)**

(54) **INSTALLATION DE PRODUCTION DE VERRE PLAT COMPRENANT UNE INSTALLATION DE MESURE EN CONTINU DE LA TEMPERATURE DU VERRE ET PROCEDE DE REGLAGE D'UNE TELLE INSTALLATION DE MESURE**

ANLAGE ZUR HERSTELLUNG VON FLACHGLAS MIT EINEM SYSTEM ZUR KONTINUIERLICHEN MESSUNG DER TEMPERATUR DES GLASES UND VERFAHREN ZUR STEUERUNG SOLCH EINES MESSSYSTEMS

FLAT GLASS MANUFACTURING PLANT COMPRISING A SYSTEM FOR CONTINUOUSLY MEASURING THE TEMPERATURE OF THE GLASS, AND METHOD FOR CONTROLLING A MEASURING SYSTEM OF SAID TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2016 FR 1651906**

(43) Date de publication de la demande:
**16.01.2019 Bulletin 2019/03**

(73) Titulaire: **Fives Stein**
**94700 Maisons Alfort (FR)**

(72) Inventeurs:
• **KUHN, Wolf**
**91540 Fontenay le Vicomte (FR)**
• **GUILLON, Stéphane**
**94490 Ormesson sur Marne (FR)**

• **MOLCAN, Peter**
**94700 MAISONS-ALFORT (FR)**
• **MECHELAERE, Gilles**
**94700 MAISONS ALFORT (FR)**
• **HEINRY, Sébastien**
**94700 MAISONS ALFORT (FR)**

(74) Mandataire: **Novagraaf Group**
**Chemin de l'Echo 3**
**1213 Onex / Geneva (CH)**

(56) Documents cités:
| | |
|---|---|
| WO-A1-2008/000939 | DE-A1- 102005 055 083 |
| DE-B- 1 121 368 | DE-B3- 102007 028 976 |
| FR-A1- 2 902 881 | GB-A- 1 525 233 |
| US-A- 3 794 477 | US-A- 4 114 444 |
| US-A- 4 185 982 | US-A- 4 687 895 |
| US-A- 4 856 911 | US-A1- 2008 314 892 |

**Description**

La présente invention concerne une installation et un procédé de mesure en continu de la température d'un ruban de verre en défilement continu sur un bain d'étain ou dans une étenderie de recuisson de verre plat.

De manière générale, la fabrication de verre plat est réalisée en faisant couler sur un lit de métal liquide, en particulier de l'étain, du verre en fusion. Le verre est alors notamment mis en forme en s'étalant sur le lit d'étain pour former le ruban. Le verre y est refroidi par exemple par convection et rayonnement, afin d'atteindre en sortie du bain d'étain une température déterminée.

Puis, le ruban de verre passe dans une étenderie où il est entraîné en défilement sur des rouleaux et où il subit une recuisson et un refroidissement contrôlés afin d'apporter au verre les caractéristiques mécaniques souhaitées. Le refroidissement y est réalisé par exemple par rayonnement ou convection.

Dans l'étenderie, plusieurs zones radiatives ou convectives sont définies dans le sens de la largeur du ruban de verre en défilement. Par exemple, le refroidissement par radiation du ruban de verre dans chaque zone radiative est réalisé par des tubes refroidisseurs longitudinaux placés en voûte dans lesquels circule de l'air. Ces refroidisseurs sont segmentés sur la largeur du ruban pour former les zones radiatives, par exemple en six zones regroupant chacune plusieurs tubes refroidisseurs. Les zones sont symétriques sur la largeur de l'étenderie à partir de l'axe longitudinal de celle-ci. Chaque zone sur une demi-largeur d'étenderie couvre une largeur différente de ruban, celle-ci étant décroissante du centre de l'étenderie vers le bord de l'étenderie.

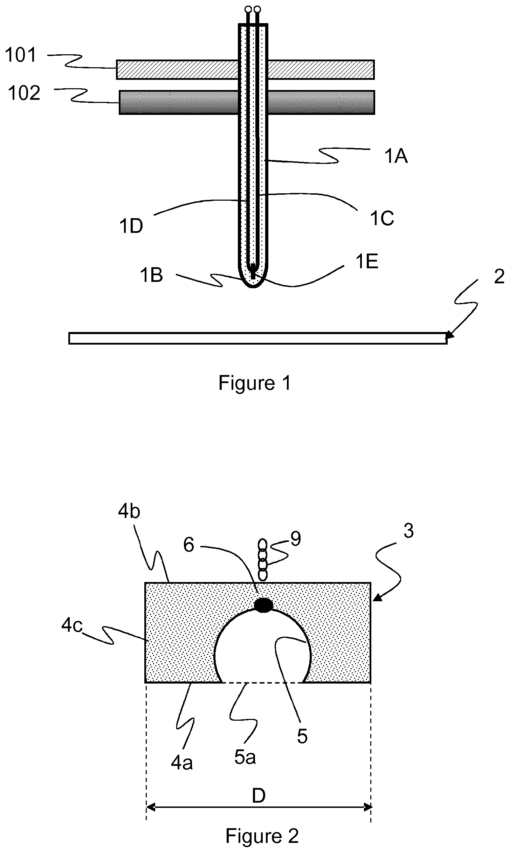

Avec ces zones de refroidissement régulées séparément, on vise à contrôler le profil de température sur la largeur du ruban. Une mesure de température doit être représentative pour chacune de ces zones pour pouvoir régler la température correspondante pour chaque zone de refroidissement. Les mesures de températures sont de manière répandue réalisées par des tiges de thermocouples traversant la voûte dont l'extrémité chaude se trouve entre les refroidisseurs et le ruban de verre, à distance du ruban de verre. Une autre implantation courante utilise des barres de support en dessous du ruban. Sur cette barre, des tiges de thermocouples sont fixées de manière à pointer verticalement en direction du ruban de verre. Plus précisément, comme illustré sur la figure 1, un thermocouple classique comprend un corps 1A, formant gaine, tubulaire creux, en métal thermiquement conducteur et résistant à l'oxydation. Une extrémité 1B proximale du corps 1A forme la partie sensible de l'instrument de mesure. En effet, deux fils 1C et 1D, chacun en un matériau différent, sont logés dans le corps 1A tubulaire et se rejoignent en un point 1E de jonction, à proximité de l'extrémité 1B proximale. Le corps 1A tubulaire est par ailleurs rempli d'un matériau, par exemple de poudre d'alumine ou d'oxyde de magnésium, scellant les deux fils 1C et 1D à l'intérieur du corps 1A. Lorsque l'extrémité 1B proximale voit sa température variée, une différence de potentiel électrique apparaît entre les deux fils 1C et 1D, et la mesure de cette différence permet de connaître la température de l'environnement en contact avec l'extrémité 1B proximale du thermocouple.

L'implantation actuelle des thermocouples induit deux problèmes majeurs :

- le corps 1A du thermocouple échange également du rayonnement avec les refroidisseurs 102 ce qui baisse la température mesurée par le thermocouple de manière significative ;
- pour régler les refroidisseurs affectés à une zone, il faut tenir compte de la mesure de la température des zones adjacentes, comme cela est expliqué par exemple dans le document FR 2 897 054.

En d'autres termes, l'implantation actuelle des thermocouples mesure en fait une température moyenne de l'environnement du ruban de verre, et non du ruban lui-même. Or, l'écart entre la température mesurée et la température réelle du ruban ne doit pas dépasser un certain seuil pour que la température mesurée soit considérée comme acceptable. Par exemple, ce seuil est communément de 10°C dans une section de refroidissement rapide, et de 5°C dans une zone de recuisson de l'étenderie.

Le document WO2008000939 décrit un dispositif de mesure en continu de la température d'un ruban de verre dans une étenderie de verre plat. Le principe mis en oeuvre consiste à créer un espace isotherme entre le ruban de verre et un capteur de température, par exemple un thermocouple. La création de cet espace isotherme demande une isolation autour de l'espace isotherme qui affleure le ruban de verre. Or, le contact d'un matériau isolant, même souple, risque de laisser les traces sur la surface du verre. Un autre problème réside dans l'usure de ce matériau isolant lié au frottement avec le ruban mais également en cas d'une casse du ruban. De plus, le dispositif selon WO2008000939 ne peut pas être utilisé pour la mesure de température du ruban de verre dans le bain d'étain, car tout frottement avec le ruban de verre y est susceptible de marquer le verre.

Le document US4185982 décrit un capteur de mesure de la température du ruban de verre dans un bain d'étain. Le capteur doit être placé au voisinage immédiat du ruban de verre dont il mesure la température sur une surface très limitée. Plus précisément, le capteur comprend un élément absorbeur de chaleur placé en vis-à-vis de la surface du ruban et dont la température, à l'équilibre thermique, approche celle du ruban. A cet effet, en approchant le capteur au plus près de la surface du ruban, il est créé un espace quasiment fermé, c'est-à-dire que l'élément absorbeur de chaleur est placé suffisamment proche de la surface du ruban pour que quasiment l'ensemble du rayonnement émis par une portion considérée de la surface du ruban reste confiné dans ledit espace quasiment fermé qui s'approche ainsi d'un espace isotherme. En d'autres termes, la création de l'espace isotherme permet de créer un corps noir dans lequel chaque surface se trouve à la même température. Ceci requiert de réduire au maximum le rayonnement perdu latéralement, c'est-à-dire s'échappant de l'espace isotherme. La température mesurée par l'élément absorbeur, qui est celle de l'espace isotherme, est indépendante de l'émissivité du ruban. La portion de la surface du ruban pour laquelle la température est mesurée par un tel capteur est de faibles dimensions, proches de celles du capteur. Or, typiquement, un capteur ne fait que quelques dizaines de millimètres de diamètre, typiquement moins de 50 mm. Cette solution n'est donc pas adaptée pour disposer d'une indication de la température moyenne d'une surface de verre importante, car elle nécessiterait de nombreux capteurs. Sa proximité avec le ruban de verre est également problématique en cas de casse du ruban, car il serait nécessaire de lever tous les capteurs avant de pouvoir réintroduire le ruban. De plus, le capteur étant placé à l'extrémité d'un tube rigide, il subit pleinement le choc de morceaux de verre en cas de casse du ruban.

Il est également connu d'utiliser des pyromètres afin de mesurer la température du ruban. L'utilisation de pyromètres permet d'obtenir une température mesurée plus précise qu'avec un thermocouple classique. Cependant, le coût des pyromètres rend leur utilisation en grand nombre dans l'industrie rédhibitoire. En outre, les pyromètres peuvent être considérés comme des capteurs ponctuels, c'est-à-dire mesurant la température quasiment en un point sur le ruban. Or, on l'a vu, la température sur la largeur du ruban doit être mesurée, ce qui implique donc d'utiliser un nombre important de pyromètres pour couvrir la largeur du ruban de verre, augmentant encore les coûts. Les pyromètres doivent également être positionnés avec une grande précision, en l'occurrence sensiblement verticalement pour mesurer la température d'un point d'une surface horizontale, pour obtenir une mesure correcte de la température, rendant leur mise en place fastidieuse.

L'invention apporte une solution à ces problèmes en proposant un capteur permettant la mesure à distance de la température moyenne du ruban de verre sur une largeur donnée tout en conservant une précision suffisante pour le pilotage du bain d'étain et de l'étenderie.

A cet effet, selon un premier aspect, l'invention propose une installation de production de verre plat telle qu'un bain d'étain ou une étenderie de recuisson comprenant une installation de mesure en continu de la température d'une surface d'un ruban de verre en défilement continu selon une direction longitudinale dans l'installation de production. L'installation de mesure comprend au moins un capteur de température du verre. Le capteur présente une surface inférieure externe sur laquelle est formée au moins une surface dite de référence, les surfaces externes du capteur autres que la surface de référence étant isolées thermiquement. Le capteur de température du verre est équipé d'un dispositif de mesure de la température de sa surface de référence. La surface de référence est disposée en vis-à-vis de et à une distance H de la surface à mesurer du ruban de verre, une dimension D caractéristique minimale de la surface inférieure étant telle que le rapport $\dfrac{D}{H}$ entre la dimension D caractéristique minimale et la distance H entre la surface de référence et la surface à mesurer est inférieur à 1.

Dans une telle installation de production, il n'est alors pas besoin de former un espace isotherme, et donc de placer le capteur au plus près de la surface à mesurer pour obtenir une mesure précise de sa température. Le capteur ainsi éloigné du ruban limite les risques d'abîmer le capteur en cas de casse du ruban de verre et facilite le passage d'outils de maintenance par exemple entre le capteur et le ruban de verre.

Selon un mode de réalisation, l'installation de mesure comprend en outre un capteur annexe de température, destiné à mesurer la température de l'environnement du capteur de température du verre. L'installation de mesure comprend alors un module de correction de la température mesurée par le capteur de température de verre par la température mesurée par le capteur annexe.

La prise en compte de la température de l'environnement permet d'augmenter la précision de la mesure de la température en tenant compte du rayonnement réfléchi par le ruban de verre.

Le capteur annexe de température peut par exemple comprendre au moins une surface externe dite de référence annexe, les autres surfaces externes du capteur annexe étant isolées thermiquement. Le capteur annexe est alors équipé d'un dispositif de mesure de la température de sa surface de référence annexe, de manière similaire au capteur de température du verre. Dans ce cas, une surface extérieure du capteur annexe autre que la surface de référence annexe peut être confondue avec une surface extérieure du capteur de la température du verre autre que la surface de référence. Le capteur de température du verre et le capteur annexe forment ainsi un élément monobloc, la surface de référence annexe étant orientée à l'opposé de la surface de référence.

Dans cette conception monobloc, la surface de référence annexe du capteur annexe est alors orientée vers la voûte de l'installation de production de verre plat. Or, en général, des refroidisseurs sont placés en voûte. Par conséquent, la surface de référence annexe du capteur annexe reçoit directement le rayonnement des refroidisseurs, de sorte que ce rayonnement est connu. L'influence de sa réflexion sur la surface à mesurer quant à la mesure de la température par le capteur de température du verre peut alors en être déduite pour corriger avec précision la mesure de la température de la surface à mesurer.

Selon un mode de réalisation, la surface inférieure du capteur de température du verre comprend une ouverture débouchant dans un espace délimité par la surface de référence de forme concave, tournée vers l'intérieur. L'espace ainsi délimité piège au moins en partie le rayonnement entrant par l'ouverture, limitant les problèmes de réflexion sur la surface de référence.

Selon un mode de réalisation, la dimension D caractéristique minimale de la surface inférieure du capteur de température du verre est un diamètre de 20mm, la distance H entre la surface de référence et la surface à mesurer du ruban de verre étant supérieure à 20mm.

Selon un mode de réalisation, l'installation de production de verre plat comprend de plus un module de correction des pertes thermiques par conduction de la surface de référence au sein du capteur de température du verre. La prise en compte des pertes thermiques par conduction permet là encore d'augmenter la précision de la mesure de la température.

Selon un deuxième aspect, l'invention propose un procédé de réglage d'une installation de mesure en continu de la température d'une surface d'un ruban de verre en défilement continu selon une direction longitudinale dans une installation de production de verre plat telle que présentée ci-dessus. Le procédé comprend les étapes suivantes, pour chaque capteur de température du verre de l'installation de mesure :

/1/ on détermine un seuil de précision acceptable pour la température mesurée par le capteur de température du verre dans l'installation de production ;

/2/ on dispose la surface de référence du capteur de température du verre en vis-à-vis d'une surface à mesurer d'un échantillon représentatif du ruban de verre, de manière à recevoir directement le rayonnement émis par la surface à mesurer de l'échantillon ;

/3/ on établit la relation entre la température mesurée par le capteur de température du verre et au moins deux paramètres de réglage du capteur de température du verre en fixant, pour l'échantillon, l'un de ces paramètres et en faisant varier l'autre de ces paramètres, les deux paramètres étant :

◦ la distance entre la surface de référence du capteur et la surface à mesurer ;
◦ la dimension transversale d'une bande affectée au capteur de température du verre sur la surface à mesurer de l'échantillon, la température réelle de la bande affectée au capteur de température du verre étant connue, la température au-delà des bords longitudinaux de la bande étant différente de la température réelle de la bande ;

/4/ l'un des deux paramètres de réglage du capteur de température du verre étant fixé par l'installation de production, on détermine à partir de la relation établie à l'étape /3/, en fonction du seuil de précision acceptable, l'autre de ces paramètres ;

/5/ on met en place le capteur de température du verre dans l'installation de production de verre en transposant le paramètre de réglage déterminé à l'étape /4/ pour l'échantillon au ruban de verre pour mesurer la température de la surface à mesurer du ruban de verre.

Le procédé permet ainsi, en se fixant un seuil de précision, de trouver avec certitude le positionnement optimal des capteurs de l'installation de mesure pour mesurer la température de la surface à mesurer avec la précision requise.

Selon un mode de réalisation du procédé, la surface à mesurer du ruban de verre au sein de l'installation de production est virtuellement découpée en bandes de dimensions transversales fixées. Chaque bande est affectée à un capteur de température du verre. Pour chaque capteur, le paramètre fixé à l'étape /3/ est la dimension transversale d'une bande affectée au capteur de température du verre, et le paramètre déterminé dans l'étape /4/ est la distance entre la surface de référence du capteur et la surface à mesurer.

Il est ainsi possible de définir une plage de distances entre la surface de référence du capteur et la surface à mesurer au sein de l'installation de production de verre dans laquelle le capteur de température de verre fournit une mesure de la température avec le seuil de précision requis. Un tel réglage trouve une application particulière dans le cas où l'installation de production est une étenderie, dans laquelle le ruban de verre est virtuellement découpé en bandes correspondant aux zones de refroidissement.

Selon un autre mode de réalisation, l'installation de mesure comprend une pluralité de capteurs de température du verre sensiblement sur un même plan perpendiculaire à la direction longitudinale. Pour chaque capteur de température du verre, le paramètre fixé à l'étape /3/ est la distance entre la surface de référence et la surface à mesurer, de sorte qu'il est déterminé à l'étape /4/ la dimension transversale de la bande affectée à chaque capteur de température du verre. L'étape /5/ comprend alors en plus une opération de détermination de la distance transversale entre deux capteurs adjacents de température du verre dans ledit plan, cette distance étant au moins égale à la somme des moitiés des dimensions transversales de la bande affectée à chacun des deux capteurs de température du verre adjacents.

Il est ainsi possible de définir, pour un seuil de précision requis, un pas entre les capteurs correspondant à l'agencement optimal pour obtenir la précision requise. Un tel réglage trouve une application particulière dans le cas où l'installation de production est un bain d'étain, où le suivi de la température sur l'ensemble de la largeur du ruban, avec une résolution suffisante, est requis.

Lorsque l'installation de mesure comprend de plus un capteur annexe de température, destiné à mesurer la température de l'environnement du capteur de température du verre, le procédé comprend de plus une opération de correction de la température de la surface à mesurer du ruban de verre mesurée par le capteur de température du verre dans l'étape /5/ par la mesure de la température de l'environnement. De plus, le procédé peut comprendre une opération de correction de la température de la surface à mesurer du ruban de verre mesurée par le capteur de température du verre dans l'étape /5/ par la prise en compte des pertes thermiques par conduction au sein du capteur.

La figure 1 est une représentation schématique d'un thermocouple classique de l'état de la technique vu en coupe, déjà décrit ci-dessus.

D'autres caractéristiques et avantages de l'invention apparaîtront à la lumière de la description d'exemples de réalisation, accompagnée des figures, dans lesquelles :

La figure 2 est une représentation schématique, en coupe transversale, d'un exemple de réalisation d'un capteur de la température ;

La figure 3 est une représentation schématique, vue en coupe transversale à la direction de défilement, d'une installation de production de verre plat en défilement continu, l'installation comprenant une installation de mesure en continu de la température comportant le capteur de la figure 2 ;

La figure 4 est une représentation schématique d'une variante de l'installation de production de verre plat de la figure 3, sur laquelle différents phénomènes thermiques intervenant dans l'installation sont illustrés ;

La figure 5 est un graphique d'une courbe illustrant l'évolution de la température mesurée par un capteur en fonction d'une distance H entre le capteur et la surface à mesurer ;

La figure 6 est un graphique d'une courbe illustrant l'évolution de l'intensité normalisée échangée entre un capteur et une surface émettrice en fonction de la position du point émetteur sur la surface émettrice ;

La figure 7 est un graphique de quatre courbes similaires à celle de la figure 5 pour quatre positions différentes du capteur par rapport à la surface émettrice ;

La figure 8 est un schéma illustrant une vue de dessus d'un capteur mesurant la température d'une bande sur la surface supérieure d'un échantillon du ruban de verre ;

La figure 9 est une vue de côté du schéma de la figure 8 ;

La figure 10 est un graphique de trois courbes illustrant l'évolution de la température de l'échantillon mesurée par le capteur des figures 8 et 9 en fonction de la position du capteur par rapport à la surface supérieure de l'échantillon pour trois dimensions différentes de bandes ;

La figure 11 est une représentation schématique d'une étenderie dans laquelle six capteurs des figures 3 et 4 ont été installés à partir du graphique de la figure 10 ;

La figure 12 est une représentation schématique d'une étenderie en considérant la mesure de la température de la surface inférieure du ruban de verre ;

La figure 13 est un graphique de quatre courbes illustrant l'évolution de la température de l'échantillon mesurée par le capteur des figures 8 et 9 en fonction d'une dimension de la bande pour quatre positions différentes du capteur par rapport à la surface supérieure de l'échantillon ;

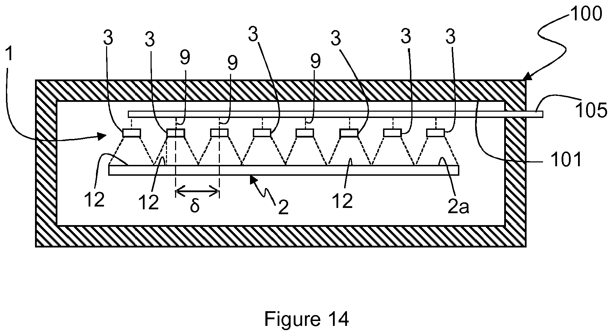

La figure 14 est une représentation schématique d'une installation de bain d'étain dans laquelle huit capteurs ont été installés à partir du graphique de la figure 13.

Sur la figure 2, il est illustré un exemple de réalisation d'un capteur 3 de température du verre pour une installation 1 de mesure en continu de la température d'une surface d'un ruban 2 de verre en défilement continu dans une installation 100 de production de verre plat, telle qu'une installation de bain d'étain ou une étenderie de recuisson de verre plat. Le capteur 3 présente au moins une surface 5 externe, appelée dans ce qui suit surface 5 de référence, c'est-à-dire la surface destinée à être en échange thermique avec une surface à mesurer du ruban 2 de verre.

Dans ce qui suit, on définit la largeur comme étant toute dimension dans le plan du ruban 2 de verre, transversale à la direction de défilement du ruban. La direction verticale est alors définie comme étant sensiblement perpendiculaire au plan de défilement du ruban 2.

Dans l'exemple présenté ici, la surface à mesurer du ruban 2 de verre est la surface 2a supérieure, étant entendu que l'installation 1 de mesure de la température pourra être adaptée pour mesurer en variante ou en combinaison la surface 2b inférieure du ruban 2 de verre. La surface 2a supérieure est considérée sensiblement plane.

La surface 5 de référence du capteur 3 de température du verre peut être conçue pour s'approcher autant que possible d'un corps noir théorique, c'est-à-dire avec une émissivité quasiment égale à 1, de sorte que l'ensemble du rayonnement thermique reçu par la surface 5 de référence n'est pas réfléchi vers le ruban 2 de verre. A cet effet, la surface 5 de référence peut être une surface plane revêtue d'une couche éliminant la réflexion et/ou peut présenter une structure adaptée. En variante ou en combinaison, la géométrie du capteur 3 peut être étudiée pour que la surface 5 de référence s'approche d'un corps noir.

Plus précisément, selon l'exemple présenté ici, le capteur 3 de température du verre présente une forme générale cylindrique, avec une surface 4a inférieure, une surface 4b supérieure et une surface 4c latérale. Une ouverture 5a, sensiblement circulaire, est formée sur la surface 4a inférieure et débouche dans un espace délimité par la surface 5 de référence alors de forme concave, tournée vers l'intérieur. Le capteur 3 est alors disposé de sorte que l'ouverture 5a est sensiblement parallèle à la surface 2a supérieure du ruban 2 de verre. Ainsi, le rayonnement émis par le ruban 2 de verre traverse l'ouverture 5a, atteint la surface 5 de référence concave, et les éventuelles réflexions sur la surface 5 de référence sont, au moins en partie, confinées dans l'espace entre la surface 5 de référence et l'ouverture 5a. Plus l'ouverture 5a est de dimension restreinte, moins le rayonnement réfléchi ne peut s'échapper par l'ouverture 5a vers le ruban 2 de verre.

Les surfaces 4a, 4b, 4c externes du capteur 3 de température du verre autres que la surface 5 de référence sont isolées thermiquement, c'est-à-dire par exemple qu'elles sont composées d'une matière isolante, de manière à limiter la perte de chaleur de la surface 5 de référence vers l'environnement extérieur. L'espace entre la surface 5 de référence et les autres surfaces 4a, 4b, 4c extérieures peut être rempli d'une matière isolante thermiquement.

Le capteur 3 de température du verre comprend de plus un dispositif 6 de mesure de la température de la surface 5 de référence du capteur 3.

On comprend donc qu'en réalité, la température mesurée par le capteur dépend de la température en chaque point émetteur du rayonnement reçu par la surface 5 de référence. Par conséquent, dans ce qui suit, on désignera, par souci de simplicité, par le terme « température » une température caractéristique du rayonnement d'un ensemble de points sur la surface 2a supérieure du ruban 2 de verre.

La température de la surface 5 de référence du capteur 3 de température du verre est mesurée avec un dispositif 6 de mesure, tel qu'un thermocouple ou une thermistance. La tête du dispositif 6 de mesure peut être placée par exemple dans l'espace délimité par la surface 5 de référence et l'ouverture 5a, ou être en contact avec la surface 5a concave.

Dans ce qui suit, la distance minimale mesurée verticalement, c'est-à-dire la plus petite distance mesurée, entre la surface 5 de référence du capteur 3 de température du verre et la surface 2a supérieure du ruban 2 de verre sera désignée par la « distance H ».

Par exemple, le capteur 3 de température du verre est suspendu à une voûte 101 de l'installation 100 de production de verre, au moyen d'un dispositif 9 de raccordement flexible, tel qu'une chaîne métallique. De manière générale, le dispositif 9 de raccordement est conçu pour limiter les pertes thermiques par conduction. Dans la voûte 101, de manière connue, un système 102 de refroidissement est placé, par exemple un système de refroidissement par rayonnement de tubes refroidis par air ou eau tels qu'utilisés dans les étenderies ou les bains d'étain.

Le capteur 3 de température du verre ainsi conçu, isolé thermiquement sur les surfaces 4a, 4b, 4c extérieures et comprenant une surface 5 de référence en vis-à-vis de la surface 2a supérieure du ruban 2 permet avec une précision acceptable d'obtenir une mesure de la température de la surface 2a supérieure du ruban.

Le capteur 3 de température du verre est placé au-dessus du ruban 2 de verre, de sorte que la surface 5 de référence soit en vis-à-vis direct de la surface 2a supérieure du ruban 2 de verre. Le capteur 3 et la surface 2a supérieure du ruban 2 de verre échangent continuellement du rayonnement thermique. Plus précisément, la surface 5 de référence reçoit directement le rayonnement émis par la surface 2a supérieure du ruban 2 de verre. La surface 4b supérieure et la surface 4c latérale étant isolées thermiquement, leurs pertes thermiques sont réduites à une faible fraction du flux du rayonnement incident. Ainsi, la surface 5 de référence du capteur 3 monte en température pour approcher celle correspondant à un équilibre de l'échange par rayonnement avec l'émission de la surface 2a supérieure du ruban 2 de verre.

En outre, au sein d'une installation 100 de production de verre plat, telle qu'un bain d'étain ou une étenderie de recuisson, la température mesurée par le capteur 3 de température du verre est influencée en particulier par :

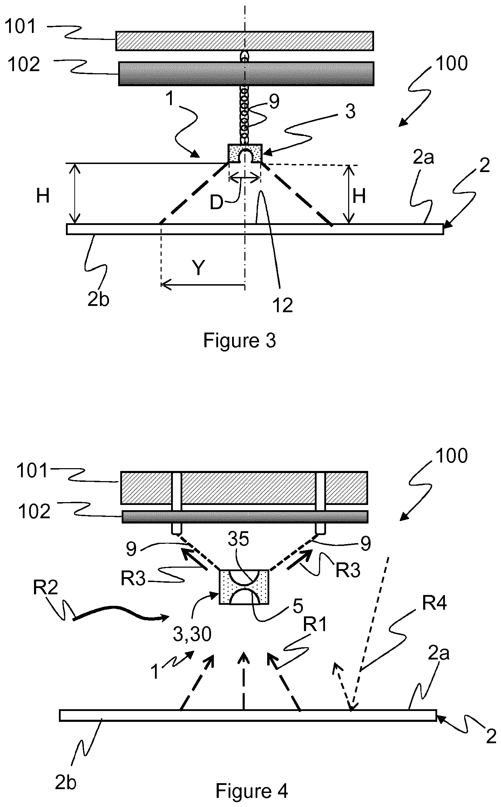

- le rayonnement thermique direct, illustré par la flèche R1 sur la figure 4, émis directement depuis la surface 2a supérieure du ruban 2 de verre et reçu par la surface 5 de référence du capteur 3 ;
- le phénomène de convection avec l'air dans l'installation 100 de production, illustré par la flèche R2 sur la figure 4, existant dans l'environnement du capteur 3 ;
- le phénomène de conduction, illustré par la flèche R3 sur la figure 4, au travers des surfaces du capteur 3 et de son dispositif 9 de raccordement ;
- le rayonnement thermique réfléchi, illustré par la flèche R4 sur la figure 4, entre la surface 2a supérieure du ruban 2 de verre et la surface 5 de référence du capteur 3.

L'isolation thermique des surfaces 4a, 4b, 4c externes du capteur 3 de température du verre, hors la surface 5, favorise la réduction de l'influence des phénomènes de convection et de conduction sur le capteur 3, et plus particulièrement sur la surface 5 de référence. La forme concave de l'exemple présenté ici tend également à limiter l'influence du phénomène de convection en protégeant la surface 5 de référence concave.

En outre, l'environnement dans l'installation 100 de production de verre plat peut être considéré comme transparent au rayonnement thermique, c'est-à-dire que l'absorption du rayonnement thermique par l'atmosphère de l'environnement est négligeable.

Par conséquent, grâce au capteur 3 de température du verre ainsi conçu, la température mesurée par le capteur 3 peut être considérée comme étant dépendante uniquement de l'équilibre thermique dû au rayonnement :

- émis par la surface 2a supérieure du ruban 2 de verre ;
- réfléchi par la surface 2a supérieure du ruban 2 de verre ;
- émis par la surface 5 de référence du capteur 3 de température du verre.

La température mesurée par le dispositif 6 de mesure de la température est donc la température de la surface 5 de référence à l'équilibre thermique. Plus précisément, contrairement à l'état de la technique dans lequel la température est mesurée en captant le flux thermique dans un espace isotherme, la température est mesurée par le capteur 3 en captant le flux du rayonnement émis et réfléchi par la surface 2a supérieure du ruban de verre. Par conséquent, cette température est dépendante de l'émissivité du verre.

Or, dans une installation 100 de production de verre, les caractéristiques du verre sont généralement connues, dont :

- une émissivité hémisphérique totale proche de 0,8 ;
- une épaisseur optique du verre supérieure à 1, pour une partie significative du spectre d'émission du ruban.

Par conséquent, la création d'un espace isotherme n'est pas requise. Ainsi, alors que cet espace isotherme se forme lorsque les dimensions du capteur par rapport à celles de la portion de surface à mesurer sont tellement importantes que le rayonnement perdu est négligeable, au contraire, selon l'invention, il est souhaitable de ne pas créer un tel espace, permettant de laisser une distance plus importante que dans l'état de la technique entre le capteur 3 et la surface 2a supérieure du ruban de verre.

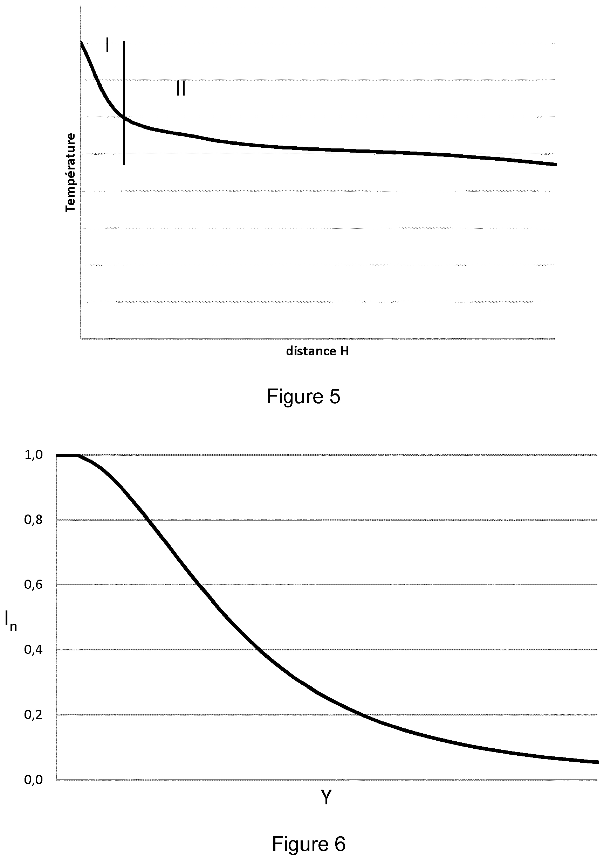

La courbe de la figure 5 illustre le lien entre la température mesurée par le capteur 3 et la distance H entre la surface 5 de référence et la surface 2a supérieure du ruban 2.

Deux zones peuvent être définies sur cette figure 5 :

- zone I : pour des distances H faibles, la mesure de la température est très sensible aux variations de distance H ;
- zone II : pour des distances H plus importantes, la mesure de la température est peu sensible aux variations de distance H.

La zone I correspond au cas de l'espace isotherme de l'état de la technique. Lorsque la distance H augmente, les pertes latérales du rayonnement augmentent, diminuant la précision de la mesure de la température. En d'autres termes, la stabilité de la mesure dans la zone I est insuffisante, notamment du fait des variations d'épaisseur du ruban.

Au contraire, en zone II, la mesure de la température est stable. C'est dans cette zone II que le capteur 3 de la température du verre selon l'invention est placé.

Il a ainsi été déterminé la relation suivante pour que le capteur 3 soit placé dans la zone II :

$$\frac{D}{H} < 1 \ (1)$$

avec

D une distance minimale caractéristique de la surface 4a inférieure du capteur 3, c'est-à-dire la plus petite dimension mesurable de la projection de la surface 4a inférieure du capteur 3 sur la surface à mesurer, en l'occurrence sur la surface 2a supérieure du ruban 2 de verre ;

H la distance minimale mesurée verticalement entre la surface 5 de référence et la surface à mesurer.

Par exemple, lorsque la surface 4a inférieure est un cercle et est disposée sensiblement parallèlement à la surface 2a supérieure du ruban 2, la distance D correspond au diamètre de la surface 4a inférieure.

De préférence, le rapport $\dfrac{D}{H}$ est inférieur ou égal à 0,9, et de préférence encore inférieur ou égal à 0,5, de manière à s'affranchir éviter de la formation d'un espace isotherme et éviter les problèmes de l'état de la technique. s'assurer qu'il n'y a pas de création d'un espace isotherme.

Le capteur 3 est de conception optimisée pour limiter les pertes thermiques par conduction de la surface 5 de référence. Cependant, afin d'améliorer la précision de la mesure de la température par le capteur 3, la température mesurée par le capteur 3 peut être corrigée pour tenir compte de ces pertes par conduction.

Plus précisément, outre les pertes par conduction et convection par ses surfaces 4a, 4b, 4c extérieures, notamment via le dispositif 9 de raccordement flexible, des pertes thermiques de la surface 5 de référence par conduction peuvent se produire au sein du capteur 3, par ses connexions, et notamment par les connexions du dispositif 6 de mesure, et par conduction latérale de la surface 5 de référence absorbant le rayonnement thermique.

Ainsi, le bilan thermique du capteur 3 peut s'écrire :

$$Q_{inab} = Q_{émis} + Q_{pertes} \quad (2)$$

avec :

Q$_{inab}$ le flux du rayonnement incident absorbé sur la surface 5 de référence ;

Q$_{émis}$ le flux du rayonnement émis par la surface 5 de référence ;

Q$_{pertes}$ le flux total des pertes thermiques par conduction de la surface 5 de référence du capteur 3.

Le flux Q$_{pertes}$ des pertes par conduction est facilement évaluable et évalué par un module de correction de sorte qu'on peut s'en servir pour augmenter la précision de la mesure du capteur 3. A cet effet, on détermine en fonction de la température T$_{mea}$ lue par le capteur 3 de température du verre le flux émis Q$_{émis}$ par la surface 5 de référence :

$$Q_{émis} = S_{réf} \times \sigma \times \varepsilon \times T_{mea}^{4} \quad (3)$$

avec :

S$_{réf}$ l'aire de la surface 5 de référence ;

σ la constante de Boltzmann ;

ε l'émissivité hémisphérique totale de la surface 5 de référence.

La température $T_{corr}^{pertes}$ mesurée par le capteur 3 et corrigée en tenant compte des pertes par conduction peut alors être calculée :

$$T_{corr}^{pertes} = \sqrt[4]{\dfrac{Q_{émis} + Q_{pertes}}{S_{réf} \times \sigma \times \varepsilon}} \quad (4)$$

La précision du capteur 3 s'en trouve augmentée.

Par exemple, le module de correction, pour une conception donnée du capteur 3, détermine le flux Q$_{pertes}$ des pertes thermiques par conduction en fonction d'un écart de température entre la surface 5 de référence du capteur 3 et ses surfaces 4a, 4b, 4c extérieures. Cet écart de température peut être estimé à partir d'une mesure, par un autre capteur, de la température de l'environnement du capteur 3 de température du verre, ou en mesurant directement la température sur les surfaces 4a, 4b, 4c extérieures, et est pris en compte dans le module de correction. Ainsi, le flux $Q_{pertes}$ des pertes thermiques par conduction est recalculé à chaque nouvelle condition de mesure.

En variante, le module de correction peut être directement renseigné d'un coefficient de pertes thermiques par conduction propre au capteur 3 en fonction de la température de l'environnement, évitant un calcul de la conduction thermique à chaque nouvelle condition de mesure.

Afin de corriger la mesure de la température qui tient compte du phénomène de réflexion de la surface du verre, l'installation 1 de mesure en continu peut comprendre un capteur 30 annexe de température destiné à mesurer la température de l'environnement du capteur 3 de température du verre. Par exemple, le capteur 30 annexe comprend une surface 35 annexe de référence, inclinée par rapport à la surface 5 de référence, de manière à ne pas être dirigée vers la surface 2a supérieure du ruban 2 de verre, mais vers l'environnement. Par exemple, le capteur 30 annexe peut être de conception similaire à celle du capteur 3 de température du verre, c'est-à-dire que ses surfaces extérieures autres que la surface 35 de référence sont isolées thermiquement. Selon un mode de réalisation, le capteur 3 de température du verre et le capteur 30 annexe ont au moins une surface extérieure confondue, de sorte que le capteur 3 de température du verre et le capteur 30 annexe forment un seul élément monobloc. La surface 5 de référence du capteur 3 de température du verre est isolée thermiquement de la surface 35 de référence annexe. Par exemple, l'espace entre la surface 5 de référence et la surface 35 de référence annexe peut être rempli d'un matériau isolant. La surface 35 annexe de référence peut alors être formée à l'opposé de la surface 5 de référence. Dans ce cas, la surface 35 de référence du capteur 30 annexe est avantageusement dirigée vers la voûte 101 et le système 102 de refroidissement. Ainsi, le rayonnement résiduel émis par le système 102 de refroidissement, et de manière générale par la voûte 101 de l'installation 100 de production, est reçu par le capteur 30 annexe et le flux de ce rayonnement est donc connu. La mesure de la température par le capteur 3 peut alors être corrigée par un module de correction, qui peut être le même que celui pour corriger la température en tenant compte des pertes thermiques par conduction de la surface 5 de référence, en tenant compte de la réflexion de ce rayonnement sur la surface 2a supérieure et reçue par le capteur 3 de température du verre, selon la formule suivante :

$$T_{corr}^{env} = \left[\frac{\left(T_{mea}^4 - (1-e_m)T_{env}^4\right)}{e_m}\right]^{0,25} \quad (5)$$

avec :

$T_{corr}^{env}$ la température corrigée par la mesure de la température de l'environnement par le capteur 30 annexe ;

$T_{mea}$ la température lue par le capteur 3 de température du verre ;

$T_{env}$ la température lue par le capteur 30 annexe ;

$e_m$ l'émissivité hémisphérique totale du verre.

L'émissivité du verre étant en général supérieure à 0,7, voire à 0,8 dans une installation 100 de fabrication de verre plat, l'influence de la température $T_{env}$ de l'environnement, lue par le capteur 30 annexe est faible. Par exemple, pour un verre avec un indice de réfraction de 1,5, une épaisseur de 5mm environ et une température de 400°C, une valeur de 0,8 pour l'émissivité du verre est couramment admise (R. Gardon, « The emissivity of transparent materials », Journal of the American Ceramic Society, Vol.39, N°8, 08/1956, 278-287). Par conséquent, une grande précision de la mesure par le capteur 30 annexe n'est pas requise.

On remarque que la relation (5) intègre déjà la correction du rayonnement émis directement par la surface 2a supérieure du ruban 2 de verre par l'émissivité $e_m$ du verre. Ainsi, le module de correction tenant compte de la température de l'environnement mesurée par le capteur 30 annexe permet d'intégrer l'émissivité $e_m$ du verre et de déterminer avec une meilleure précision la température du ruban 2 de verre sans avoir besoin de créer un espace isotherme.

Dans les cas de mesures de température du verre par création d'un espace isotherme telles qu'enseignées par les documents WO2008000939 et US4185982, une partie du rayonnement non négligeable peut s'échapper à travers de la fenêtre optique du verre. Cette perte réduit l'intensité du rayonnement et dégrade ainsi la précision de la mesure de température. L'installation 1 de mesure de la température selon l'invention réduit l'influence du rayonnement s'échappant à travers la fenêtre optique du verre sur la mesure de la température par le capteur 3 de température du verre, car aucun espace isotherme n'est visé entre le verre et le capteur 3.

Quoi qu'il en soit, cette perte peut être corrigée à l'aide d'un moyen de calcul thermique de l'erreur de mesure de température en tenant compte des propriétés optiques du verre et du flux de rayonnement perdu à travers le verre, selon l'enseignement de WO2008000939.

Les différentes corrections de la température mesurée par le capteur 3 présentées ci-dessus peuvent être appliquées en combinaison ou une à la fois, en fonction des conditions d'utilisation du capteur 3.

Par exemple, la température $T_{finale}$ corrigée à la fois en tenant compte des pertes thermiques par conduction et en tenant compte de la température de l'environnement peut être obtenue par la formule suivante :

$$T_{finale} = T_{corr}^{env} + \left( T_{corr}^{pertes} - T_{mea} \right) \ (6)$$

Il convient par ailleurs de s'assurer que pour une portion visée de la surface 2a supérieure du ruban 2 de verre, le capteur 3 de température du verre mesure la température de cette portion.

Le capteur 3 de température du verre a un champ de capture, qui peut être défini comme étant ce que « voit » le capteur 3. En théorie, lorsque le capteur 3 est positionné de telle manière que la surface 4a inférieure est sensiblement parallèle à la surface 2a supérieure du ruban 2 de verre, ce champ de capture projeté sur la surface 2a supérieure du ruban 2 correspond à un disque de rayon infini, c'est-à-dire que le rayonnement thermique émis par tout point sur la surface 2a supérieure du ruban 2 de verre peut être perçu par le capteur 3. Cependant, l'intensité du rayonnement reçu est d'autant plus importante que le point émetteur du rayonnement est proche de la perpendiculaire au centre du capteur 3, et plus précisément au centre de sa surface 5 de référence.

Un matériau diélectrique tel que le verre émet du rayonnement avec une variation angulaire de l'intensité qui se rapproche d'une surface lambertienne. Plus précisément, la surface 2a supérieure du ruban, considérée comme plane, émet en un point donné un rayonnement avec une variation angulaire de l'intensité proche de celle d'un cosinus. La surface 5 de référence, assimilable à un corps noir, est par définition une surface lambertienne.

Ainsi, selon un modèle admis, deux surfaces lambertiennes échangent du rayonnement selon une loi en cosinus carré $(cos^2)$ (Siegel et Howell, Thermal Radiation Heat Transfer, 4th Edition, CRC Press, 2001), dont une illustration est donnée sur la figure 6. Cette loi reflète la variation de l'intensité normalisée $I_n$ de rayonnement reçu par un capteur théorique ponctuel en fonction de la position Y du point émetteur considéré sur une surface émettrice de forme circulaire, c'est-à-dire qu'il est considéré qu'en Y=0 (i.e. au droit du capteur ponctuel), l'intensité normalisée $I_n$ est égale à 1. Plus le point considéré est éloigné du capteur (i.e. plus Y est grand), moins sa contribution à l'intensité reçue par le capteur est élevée. On peut donc définir pour le capteur un champ de capture dominant de forme conique, dont le sommet correspond au capteur ponctuel et dont la base correspond au disque 12 de rayon Y pour lequel un seuil minimal d'intensité $I_n$ est donné. Plus simplement, dans ce qui suit, on assimilera le champ de capture dominant à sa projection sur la surface à mesurer, c'est-à-dire au disque 12 de rayon Y, représenté sur la figure 3. La température sur la portion de surface délimitée par le disque 12 du champ de capture est alors considérée comme sensiblement uniforme.

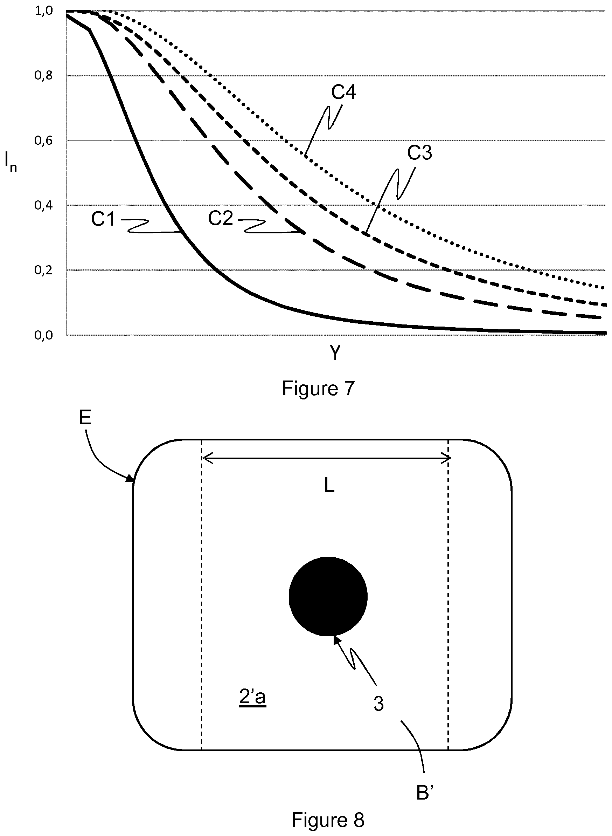

Dans le cas d'une installation 100 de production de verre, le ruban 2 de verre étant en défilement, le modèle ci-dessus d'une surface émettrice de forme circulaire n'est pas applicable. On a alors défini le cas dans lequel la surface émettrice est une bande B de verre de largeur L connue et de longueur infinie, pour laquelle la température est connue sur la bande et pour laquelle la température au-delà des bords de la bande est connue. Le modèle de la loi en cosinus carré est plus difficilement applicable. Toutefois, l'allure de la courbe liant l'intensité $I_n$ normalisée et la position Y demeure similaire à celle de la figure 6. Ainsi, sur la figure 7, il est représenté quatre courbes respectivement C1, C2, C3 et C4 illustrant l'intensité $I_n$ en fonction de la position Y du point émetteur considéré sur la surface à mesurer, respectivement pour quatre distances H croissantes (i.e. la courbe C1 illustre le cas pour la distance H la plus faible et la courbe C4 illustre le cas pour la distance H la plus élevée), dans le cas d'une bande de verre.

Ainsi, pour un même seuil minimal d'intensité $I_n$ donné, le rayon du disque du champ de capture du capteur 3 augmente lorsque la distance H entre la surface 5 de référence et la surface émettrice augmente. En d'autres termes, plus la surface 5 de référence du capteur 3 est éloignée de la surface de la bande B à mesurer, plus la contribution de l'environnement au-delà des bords de la bande B à l'intensité du flux reçu par le capteur 3 est importante, et donc moins la précision de la mesure est élevée.

Par conséquent, il existe une relation entre la température mesurée avec un seuil de précision donné d'une bande B, la largeur L de la bande B et la distance H entre la surface 5 de référence et la surface à mesurer de la bande B.

Pour un opérateur dans une installation 100 de production de verre plat, c'est un écart acceptable entre la température mesurée et la température réelle de la bande de verre qui est en pratique considéré pour déterminer si la précision de la mesure est suffisante ou non. Dans la suite de la description, l'expression « seuil de précision acceptable » désignera alors tout seuil relatif à un paramètre physique pouvant être relié à un écart entre la température mesurée par le capteur et la température réelle et déterminée par l'opérateur.

Les courbes de la figure 7 résultent d'un exemple de calcul symbolique dont la complexité le rend difficilement applicable à toute situation au sein de l'installation 100 de production du verre plat. Il a donc été mis au point des méthodes plus accessibles pour déterminer la relation entre la largeur L d'une bande B et la distance H pour un seuil de précision acceptable donné.

Ces méthodes ont en particulier l'avantage d'intégrer des aspects qui ne sont pas facilement accessibles par le calcul précédent, et notamment le fait que pour un capteur de conception particulière avec une surface 5 de référence qui n'est pas strictement plane ou d'une forme non circulaire, ou selon l'exemple présenté pour une ouverture 5a non strictement circulaire, le champ de l'intensité $I_n$ capté par la surface 5 de référence sera également particulier.

Par souci de clarté, dans ce qui suit, le raisonnement est illustré avec un exemple dans lequel la surface 5 de référence du capteur 3 est de forme circulaire, en tout cas que son champ de capture dominant se traduit par un disque 12 sur la surface à mesurer. Dépendamment de la géométrie de la surface 5 de référence, il pourra en être autrement. Par exemple, la surface 5 de référence peut être de forme oblongue, élancée dans la direction longitudinale ou transversale, de sorte que la projection du champ de capture dominant sur la surface à mesurer est également de forme oblongue.

Une première application, particulièrement adaptée au cas de la mesure de la température du ruban 2 de verre dans une étenderie, est, pour une largeur L donnée d'une bande B sur la surface 2a supérieure du ruban 2 de verre, de déterminer la distance entre la surface 5 de référence et la surface 2a supérieure du ruban 2 de verre, c'est-à-dire la position du capteur 3 au-dessus du ruban 2 de verre, et qui sera notée H dans ce qui suit.

Dans le cas d'une étenderie, le ruban 2 de verre est virtuellement découpé en bandes B de largeur L, correspondant aux largeurs standards des zones radiatives. Le nombre de bandes sur le ruban 2 de verre est typiquement égal à six, avec par exemple les largeurs suivantes, successivement à partir d'un bord longitudinal du ruban 2 : 495, 680, 850, 850, 680 et 495 mm.

A chaque bande B du ruban 2 de verre, un capteur 3 de température du verre est affecté, c'est-à-dire, en d'autres termes, que pour un capteur 3 donné, il est considéré que la température mesurée correspond uniquement à la température de la bande B qui lui est affectée. La largeur L d'une bande affectée à un capteur 3 est donc fixée par la structure de l'étenderie.

Par conséquent, selon cette première application, pour chaque capteur 3 de température du verre, pour un seuil de précision acceptable déterminé ou, en pratique, pour un écart donné de température, le diamètre du disque 12 de son champ de capture dominant est sensiblement égal à la largeur L de la bande du ruban 2 de verre qui lui est affecté.

Ainsi, en déterminant, pour une largeur L donnée d'une bande B, la température mesurée par le capteur 3 en fonction de la hauteur H entre la surface 5 de référence et la surface à mesurer, il peut être déduit une hauteur $H_{max}$ maximale au-delà de laquelle un seuil de précision donné n'est pas respecté.

Pour déduire la relation entre la hauteur H et la largeur L d'une bande B, un échantillon E représentatif du ruban 2 de verre est considéré. L'échantillon E est formé à partir d'un matériau qui présente les mêmes caractéristiques pertinentes que celles du ruban 2 de verre pour la mesure de la température, notamment :

- même teinte ;
- même état de surface ;
- même émissivité.

En pratique, il suffira de former l'échantillon E en prélevant un morceau du ruban 2 de verre pour lequel il est prévu de mesurer la température et de réaliser les étapes suivantes dans un laboratoire. Toutefois, il est également possible de réaliser ces étapes au sein de l'installation 100 de production, l'échantillon E étant alors directement formé sur le ruban 2 de verre. En troisième option, un modèle numérique détaillé du rayonnement intégrant les propriétés du verre et du capteur 3 de température du verre permet de réaliser virtuellement les tests.

L'échantillon E est porté à une température de sorte qu'au moins sur une bande B' de largeur connue sur une surface de l'échantillon E, la température est connue, et qu'au-delà des bords de la bande B', la température est différente. La largeur de la bande B' sur l'échantillon E est assimilée à la largeur L de la bande B sur la surface 2a supérieure du ruban 2 de verre, et sera donc notée également L dans ce qui suit.

La bande B' peut correspondre à l'ensemble de l'échantillon E, de sorte que la température au-delà de la bande B' est celle de l'environnement. La bande B' peut toutefois être localisée sur l'échantillon E. La température de l'échantillon E hors de la bande B' étant par exemple inférieure à celle de la bande B'. L'écart entre la température de la bande B' sur l'échantillon E et la température au-delà des bords longitudinaux de la bande B' est de préférence d'au moins 100°C, et de préférence encore d'au moins 200°C. Ceci assure un écart suffisant de l'intensité du rayonnement entre la bande B et la zone hors bande afin de faciliter l'interprétation de la mesure.

Cependant, une distinction peut être faite en distinguant dans l'installation 100 de l'étenderie les bandes B situées le long des bords longitudinaux des autres bandes. En effet, sur le ruban 2 de verre dans son ensemble, il est considéré que la différence de température ne doit pas dépasser 40°C voir 30°C, sinon les contraintes deviennent trop importantes et le ruban 2 peut casser. Par ailleurs, la température de l'environnement du ruban 2 peut être inférieure d'environ 200°C à la température du ruban 2. Par conséquent, lorsque la bande B considérée est entourée longitudinalement de deux bandes adjacentes, la mesure de la température est plus faiblement influencée par les bandes adjacentes par rapport au cas où la bande B considérée est située le long d'un bord longitudinal du ruban 2 de verre et que la mesure de la température est influencée par l'environnement. Ainsi, dans le cas où il est considéré une bande B du ruban 2 de verre située entre deux bandes adjacentes, l'échantillon E représentatif peut être tel que la température au-delà des bords longitudinaux de la bande B' de l'échantillon E est différente de celle de la bande B' de 40°C environ, et de préférence de 30°C environ. Dans le cas où il est considéré une bande B du ruban 2 de verre située le long d'un bord longitudinal du ruban 2 de verre, l'échantillon E représentatif peut être tel que la température au-delà des bords longitudinaux de la bande B' de l'échantillon E est différente de celle de la bande B' de 200°C environ. Cette distinction permet de reproduire pour l'échantillon E des conditions plus proches de celles rencontrées dans l'installation 100 de production de verre.

Les dimensions de l'échantillon E sont supérieures à celles de la surfaces de référence de sorte que la surface 5 de référence peut être totalement comprise dans la bande B' sur l'échantillon E. En pratique, cela est facilement le cas puisque la largeur L' de la bande B' sur l'échantillon E correspond à une largeur L standard d'une bande B sur le ruban 2 de verre définie dans une étenderie et est donc suffisamment importante par rapport aux dimensions du capteur 3. Pour l'exemple décrit ici, la surface 5 de référence est de forme sensiblement circulaire et la surface 4a inférieure présente un diamètre de 20 mm.

Le capteur 3 est placé de sorte que sa surface 5 de référence soit en vis-à-vis direct de la surface 2'a supérieure de l'échantillon E, sensiblement centrée sur la largeur de la bande B'. Puis, la température est mesurée pour différentes distances entre la surface 5 de référence et la surface 2'a supérieure de l'échantillon E. Cette distance est assimilée à la distance H entre la surface 5 de référence du capteur 3 et la surface 2a supérieure du ruban 2 de verre lorsque le capteur 3 est mis en place dans l'installation 100 de production. Cette distance est donc également notée H.

La mesure de la température en fonction de la distance H entre la surface 5 de référence du capteur 3 et la surface à mesurer est réalisée pour au moins trois largeurs L de bande B' d'un échantillon E, qui peuvent correspondre ici aux trois largeurs L1, L2 et L3 de bande B dans une étenderie, avec :

- L1=495 mm ;
- L2=680 mm ;
- L3=850 mm.

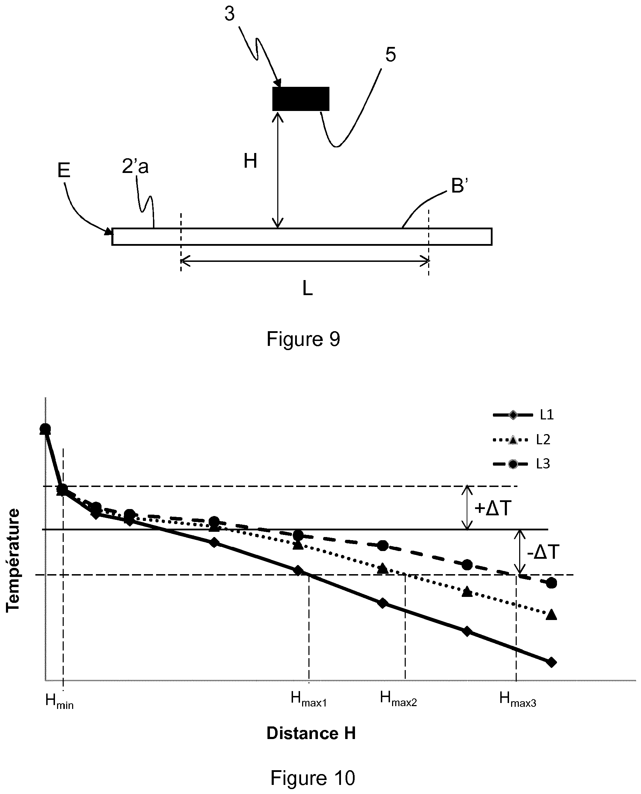

La figure 10 illustre les trois courbes obtenues. De préférence, les mesures sur l'échantillon E tiennent compte de la correction par la mesure de la température de l'environnement par le capteur 30 annexe et de la correction par la prise en compte des pertes par conduction.

Le seuil de précision acceptable est ici traduit par une différence $\Delta T$ de température entre la température réelle connue de la bande B' de l'échantillon E et la température mesurée. Il est ainsi possible de déterminer, pour une largeur L de bande B' donnée, une plage de distances H pour laquelle le capteur 3 fournit une mesure de température avec une marge d'erreur +/- $\Delta T$ acceptable.

A titre d'exemple, en considérant :

- un $\Delta T$ de 10°C,
- un écart pour chaque bande entre la température de la bande et la température hors bande de 200°C ;
- une émissivité du verre de 0,8 ;
- un capteur dont la dimension D minimale caractéristique de la surface 4a inférieure est de 20 mm ;

pour chacune des largeurs respectivement L1, L2, L3, il a été déterminé une distance $H_{min}$ et une distance respectivement $H_{max1}$, $H_{max2}$ et $H_{max3}$ entre lesquelles la mesure de la température par le capteur 3 est acceptable, avec dans l'exemple considéré ici :

- $H_{min}$>20mm
- $H_{max1}$=105mm
- $H_{max2}$=150 mm
- $H_{max3}$=195 mm

$$\frac{D}{H} < 1$$

La distance $H_{min}$ correspond à la relation (1) présentée ci-dessus pour que le capteur 3 de température du verre se trouve dans la zone II, en dehors du cas de l'espace isotherme.

Les distances $H_{min}$ et $H_{max}$ ainsi déterminées pour les bandes B' sur un échantillon E sont alors transposées aux bandes B au ruban 2 de verre dans une étenderie pour positionner les capteurs 3 affectés à chaque bande B. Plus précisément, connaissant la largeur L de la bande B affectée au capteur 3, il est déterminé la hauteur H à laquelle le capteur 3 peut être placé au-dessus de la bande B de la surface 2a supérieure du ruban 2 de verre qui lui est affectée pour fournir une mesure de la température avec un seuil de précision, c'est-à-dire avec une marge d'erreur sur la mesure, acceptable.

Plus généralement, les capteurs 3 de l'installation 1 de mesure en continu sont placés dans l'étenderie de sorte que leur surface 5 de référence se situe à une distance H déterminée en fonction de la largeur L de la bande B qui leur est affectée et du seuil de précision acceptable déterminé.

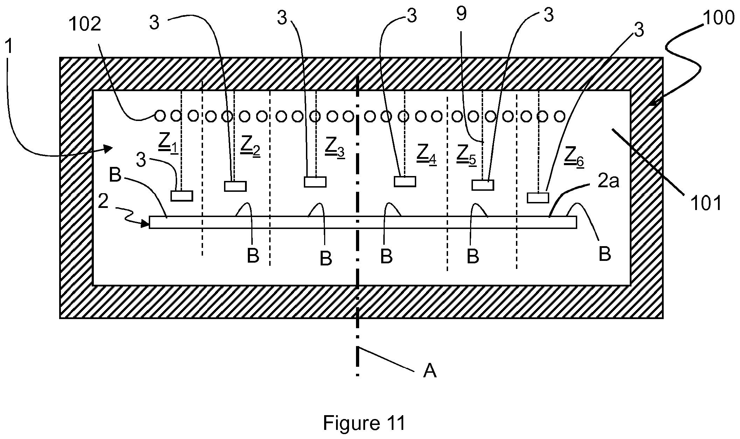

La figure 11 montre un exemple d'installation 1 de mesure en continu réglée comme décrit précédemment pour une étenderie. Sur cette figure, nous pouvons voir schématiquement représentés, l'étenderie 100, le ruban 2 de verre, les capteurs 3 de mesure de la température, le système 102 de refroidissement disposé sous la voûte 101, et l'axe A de l'étenderie. Les capteurs 3 sont tous disposés dans un même plan vertical transversal. L'exemple d'implantation des capteurs 3 est résumé dans le tableau ci-dessous, pour les six zones désignées $Z_1,..., Z_6$, et pour respecter un $\Delta T$ de 10°C :

| Zone | $Z_1$ | $Z_2$ | $Z_3$ | Axe A de l'étenderie | $Z_4$ | $Z_5$ | $Z_6$ |
|---|---|---|---|---|---|---|---|
| **Largeur de la zone** | 495 mm | 680 mm | 850 mm | | 850 mm | 680 mm | 495 mm |
| **Distance H** | 105 mm | 150 mm | 195 mm | | 195 mm | 150 mm | 105 mm |

| **Distance entre l'axe A de l'étenderie et le centre du capteur 3** | 1775 mm | 1190 mm | 425 mm | | 425 mm | 1190 mm | 1775 mm |
|---|---|---|---|---|---|---|---|

Selon l'exemple présenté ici, les capteurs 3 sont avantageusement placés aux hauteurs $H_{max1}$, $H_{max2}$ et $H_{max3}$ trouvées précédemment afin d'être le plus éloigné possible du ruban 2 de verre, limitant les risques d'être abîmés en cas de casse du ruban et facilitant le passage d'outils de maintenance sous les capteurs 3.

La variation de la distance H des capteurs 3 par rapport à la surface 2a supérieure du ruban 2 de verre permet d'ajuster leurs profils de sensibilité à la largeur des zones de réglage. Si la largeur L des bandes de chaque zone de réglage requiert une distance H plus importante que la hauteur disponible entre le ruban 2 de verre et le système de refroidissement, les capteurs 3 peuvent être implantés à la transition entre deux sections de refroidissement avec une interruption des refroidisseurs sur la longueur de l'étenderie. Ainsi, un réglage précis d'une zone radiative par réglage du système 102 de refroidissement en fonction de la mesure de la température de la bande sur le ruban 2 de verre par le capteur 3 affecté à la bande en question peut être effectué.

Avantageusement, le dispositif 9 de raccordement pour fixer le capteur 3 sur la voûte 101 de l'étenderie 100 peut comprendre une chaîne métallique. Cette solution présente notamment deux avantages :

- la conduction thermique entre le capteur 3 et la voûte 101 est limitée par la faible surface de contact entre les maillons de la chaîne ;

- le capteur 3 est libre de bouger si un morceau de verre vient le heurter après une casse du ruban 2 réduisant ainsi le risque de l'endommager.

Quelques avantages de la solution selon l'invention sont repris ci-dessous :

- la forme concave de la surface 5 de référence limite l'influence du phénomène de convection sur la mesure de la température par le capteur 3 de température du verre ;

- la distance H de chaque capteur 3 de température du verre peut être ajustée pour capter correctement chaque zone de refroidissement radiatif dans l'étenderie ;

- une interaction mutuelle du réglage des zones est éliminée ;

- la mesure intégrée d'un profil d'intensité de l'émission pour chaque zone est plus représentative que la mesure ponctuelle faite par des pyromètres.

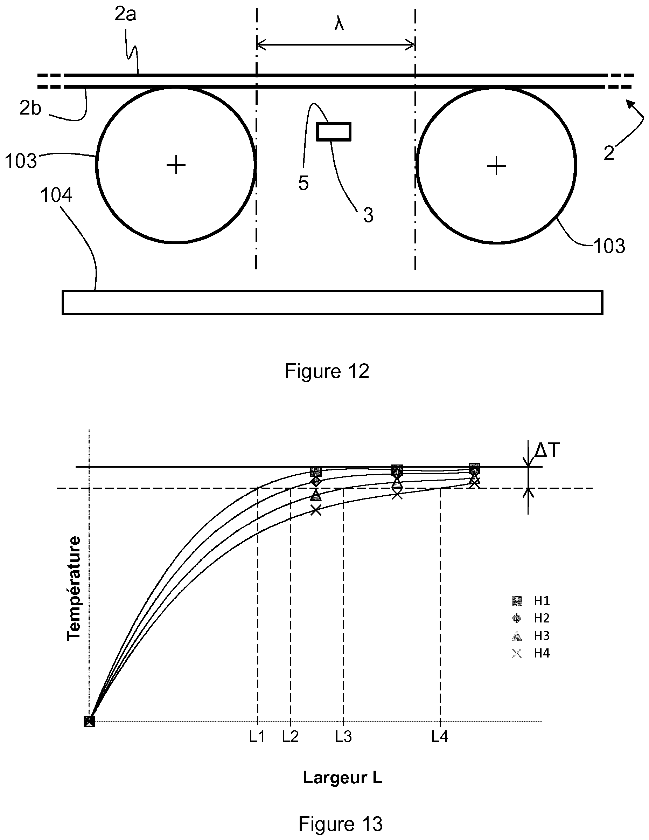

L'exemple présenté ici pour mesurer la température 2a supérieure du ruban 2 de verre peut être adaptée pour mesurer la température de la surface 2b inférieure du ruban 2 de verre. En effet, comme cela a déjà été mentionné dans l'introduction, dans le cas d'une étenderie 100 notamment, le ruban 2 de verre est transporté par des rouleaux 103 en acier ou en céramique, espacés longitudinalement, en contact avec la face 2b inférieure du ruban 2 de verre (figure 12). Sur le sol, en dessous des rouleaux 103, des refroidisseurs 104 sont placés et réglés pour équilibrer les températures entre les deux surfaces 2a, 2b du ruban. Ces refroidisseurs 104 peuvent être séparés en zones sur la largeur, de manière similaire, mais pas nécessairement symétrique, aux refroidisseurs 102 de la surface 2a supérieure.

L'espace longitudinal entre deux rouleaux 103 adjacents doit alors être pris en compte dans le placement du capteur 3. En effet, d'une part les rouleaux 103 limitent le disque du champ de capture dominant du capteur 3 dans le sens longitudinal, et d'autre part les rouleaux 103 reçoivent et réfléchissent une partie du rayonnement émis par la surface 2b inférieure du ruban 2, induisant des réflexions entre les rouleaux 103, la surface 5 de référence du capteur 3 et la surface 2b inférieure du ruban 2. Il est donc préférable de limiter l'impact du rayonnement réfléchi sur les rouleaux 103. A cet effet, comme le rayonnement émis perpendiculairement à la surface 2b inférieure est celui avec l'intensité la plus importante, il a été déterminé qu'en limitant la dimension du disque du champ de capture du capteur 3 à la distance $\lambda$ longitudinale minimale entre deux rouleaux 103 adjacents, l'influence de ces rayonnements réfléchis peut être négligée sur la mesure de la température.

Ainsi, lorsque la distance $\lambda$ minimale entre deux rouleaux 103 adjacents est inférieure à la largeur L d'une bande considérée sur la surface 2b inférieure du ruban 2 de verre, la dimension du champ de capture dominant du capteur 3 est assimilée à la distance $\lambda$ minimale entre deux rouleaux 103 adjacents. Dès lors, pour un seuil de précision acceptable déterminé, il est possible à partir du diagramme de la figure 10, en considérant la distance $\lambda$ à la place de la largeur L, de déterminer la distance H entre la surface 5 de référence du capteur 3 et la surface 2b inférieure du ruban 2 pour positionner le capteur 3 dans l'étenderie 100.

Une deuxième application va maintenant être décrite, particulièrement adaptée à une installation de bain d'étain, dans laquelle la problématique n'est pas la même qu'au sein de l'étenderie.

Dans le cas d'une installation 100 de bain d'étain, des refroidisseurs ajustables sont mis en oeuvre sur la largeur du ruban 2 de verre. Il n'existe donc pas de bandes de refroidissement prédéfinies. Il est donc souhaitable de mesurer un profil de température sur l'ensemble de la largeur du ruban 2 avec une résolution suffisante, par exemple d'au moins environ 0,5m, pour ajuster les refroidisseurs au mieux. Or, actuellement, très peu de pyromètres sont installés sur les bains d'étain pour effectuer les mesures notamment à cause de la complexité de la voûte de ces installations. En effet, les pyromètres requièrent des connexions qui traversent la voûte de l'installation afin de protéger l'électronique des hautes températures. En surcroît, l'optique des pyromètres doit être refroidie - ce qui entraîne des problèmes de condensation des vapeurs d'étain et par la suite des défauts par des gouttes d'étain sur le ruban de verre.

Ainsi, à cause de la complexité de la voûte, il est souhaitable de placer des capteurs 3 de température du verre sur un support 105 horizontal, par exemple sous forme d'un bras passant par une trappe latérale auquel les capteurs 3 sont suspendus par un dispositif 9 d'accrochage, à une hauteur fixée au-dessus du ruban 2 de verre. Par conséquent, les capteurs 3 sur le support 105 sont placés à une hauteur H identique au-dessus de la surface 2a supérieure du ruban 2 de verre. Il est alors nécessaire de trouver la bonne distance et le bon nombre des capteurs 3 à placer sur le support pour obtenir une mesure de la température sur l'ensemble de la largeur de la surface 2a supérieure du ruban 2 de verre avec la résolution voulue.

Avec la méthode selon l'invention, il est alors possible à partir de la relation entre la distance H et la largeur L, de déterminer, pour un seuil de précision acceptable, pour chaque capteur 3, la largeur L de la bande B affectée au capteur 3 pour la distance H fixée.

A cet effet, un échantillon E, comme exposé précédemment, du ruban 2 de verre est formé. Plus précisément, une pluralité d'échantillons E sont formés, avec pour chaque échantillon E une largeur B sur la surface 2'a supérieure de largeur L différente.

Pour un capteur 3 considéré, la distance H entre la surface 5 de référence et la surface 2'a supérieure des échantillons E est fixée et est identique pour tous les échantillons E. Le capteur 3 est similaire à celui présenté ci-dessus, avec notamment une surface 5 de référence sensiblement circulaire et une surface 4a inférieure d'un diamètre de 20 mm.

La température mesurée par le capteur 3 pour chaque distance H est alors enregistrée. Sur la figure 13, il a été représenté la température mesurée par un capteur 3 en fonction de la largeur L de bande pour quatre distances H différentes :

- H1=50 mm;
- H2=100 mm ;
- H3=150 mm;
- H4=200 mm.

Ces distances H correspondent à des positions possibles pour le capteur 3 au-dessus de la surface 2a supérieure du ruban 2 de verre dans l'installation de bain d'étain.

Le seuil de précision acceptable est ici traduit par une différence ΔT de température entre la température réelle connue de la bande B' de l'échantillon E et la température mesurée. En reportant ce ΔT sur la figure 13, il est alors possible de déterminer pour chaque hauteur H une largeur L de bande B qui peut être considérée comme affectée au capteur 3. En d'autres termes, pour un capteur 3 de température du verre considéré et une hauteur H déterminée, il existe une largeur L minimale de bande B affectée au capteur 3 couverte par le disque 12 du champ de capture dominant du capteur 3 par un seuil de précision acceptable.

A titre d'exemple, en considérant :

- un ΔT de 10°C,
- un écart pour chaque bande entre la température de la bande et la température hors bande de 200°C ;
- une émissivité du verre de 0,8 ;
- un capteur dont la dimension D minimale caractéristique de la surface 4a inférieure est de 20 mm ;

pour chacune des distances respectivement H1, H2, H3 et H4, il a été déterminé une largeur respectivement L1, L2, L3 et L4 de bande B' au-delà de laquelle la température mesurée par le capteur 3 présente une marge d'erreur acceptable, avec :

- L1=350 mm ;
- L2=400 mm ;
- L3=500 mm ;
- L4=660 mm.

Il existe bien entendu une distance H maximale à laquelle les capteurs 3 peuvent être placés et au-delà de laquelle la mesure de la température est incorrecte pour des largeurs L de bandes B applicables au ruban 2 de verre dans le bain d'étain, c'est-à-dire pour laquelle une courbe comme celles de la figure 13 avec des valeurs de largeurs L permettant d'atteindre le ΔT donné serait impossible à obtenir.

Dans l'installation de bain d'étain, la distance H entre la surface 2a supérieure du ruban 2 de verre et la surface 5 de référence du capteur 3 est fixée. En transposant la largeur L minimale trouvée pour une bande B' de l'échantillon E à une bande B sur la surface 2a supérieure du ruban 2 de verre, il est ainsi affecté à un capteur 3 de température du verre une bande B de largeur L pour laquelle la température mesurée par le capteur 3 est acceptable et représentative pour cette bande B. On peut alors en déduire la distance δ minimale entre deux capteurs 3 adjacents dans le sens de la largeur du ruban 2 de verre pour s'assurer que l'intégralité de la surface 2a supérieure du ruban 2 de verre, sur la largeur, voit sa température mesurée par les capteurs 3.

Ainsi, par exemple lorsque la distance H est fixée à 100 mm, deux capteurs 3 adjacents identiques, avec un même seuil de précision acceptable traduit par un même ΔT de 10°C, peuvent être placés de telle sorte que la distance δ entre leur centre, et plus précisément entre le centre de leur surface 5 de référence, est de 400 mm.

Si la distance δ entre le centre de deux capteurs 3 adjacents est inférieure à la largeur L minimale déterminée précédemment, alors les champs de capture dominant de deux capteurs 3 adjacents se recouvrent, ce qui ne détériore pas en soi la mesure, mais augmente inutilement le nombre de capteurs.

Si la distance δ entre le centre de deux capteurs 3 adjacents est supérieure à la largeur L minimale déterminée précédemment, alors la résolution de la mesure n'est pas optimale. En effet, plus les capteurs 3 sont éloignés les uns des autres, plus la largeur de la bande sur la surface 2a supérieure du ruban 2 de verre considérée comme affectée à un capteur 3 est importante. La température mesurée sur cette bande par le capteur 3 étant une température caractéristique, elle peut masquer des écarts de température au sein de la bande, c'est-à-dire ne pas être réellement significative de la température de la bande en question.

Ainsi, la largeur L minimale déterminée précédemment au moyen de l'échantillon E permet de régler l'installation 1 de mesure en continu de manière adaptée à l'installation de bain d'étain en déterminant le nombre minimal requis de capteurs 3 pour obtenir la mesure de la température sur l'ensemble d'une largeur la surface 2a supérieure du ruban 2 de verre avec une résolution optimale, pour une distance H fixée.

Bien entendu, la première application donnée en exemple dans une étenderie peut être mise en oeuvre dans une installation de bain d'étain dans laquelle on souhaite contrôler la température sur une largeur L de bande B donnée ;

inversement, la deuxième application donnée en exemple dans une installation de bain d'étain peut être mise en oeuvre dans une étenderie dans laquelle on souhaite obtenir un profil de la température du ruban 2 sur l'ensemble de sa largeur.

Contrairement à l'état de la technique qui cherche à placer la surface de référence d'un capteur le plus près possible du ruban de verre, voire à être en contact avec le ruban de verre, selon l'invention le capteur 3 est à l'écart de la surface 2a supérieure, sans contact avec le ruban 2. Ainsi, en cas de casse du ruban 2 de verre, les risques que le capteur 3 soit endommagé sont limités. En outre, le capteur 3 étant sans contact avec le ruban 2 de verre, le capteur 3 ne risque pas d'endommager le ruban 2 et peut être utilisé pour mesurer la température du ruban 2 de verre sur un bain d'étain. La distance H plus élevée que dans l'état de la technique, pour une précision de la mesure adaptée, permet également à un opérateur d'intervenir sur le ruban 2 de verre en cas de besoin en passant un outil sous le capteur 3. Enfin, l'épaisseur du ruban 2 de verre n'étant pas nécessairement constante en fonction de la production, la distance H déterminée selon l'invention est en général toujours suffisante pour éviter tout contact entre le capteur 3 et le ruban 2 de verre.

## Revendications

1.  Installation (100) de production de verre plat telle qu'un bain d'étain ou une étenderie de recuisson comprenant une installation (1) de mesure en continu de la température d'une surface (2a, 2b) d'un ruban de verre (2) en défilement continu selon une direction longitudinale dans l'installation (100) de production, l'installation (1) de mesure comprenant au moins un capteur (3) de température du verre, ledit capteur (3) présentant une surface (4a) inférieure externe sur laquelle est formée au moins une surface (5) dite de référence, les surfaces externes (4) du capteur (3) autres que la surface (5) de référence étant isolées thermiquement, le capteur (3) de température du verre étant équipé d'un dispositif (6) de mesure de la température de sa surface (5) de référence, la surface (5) de référence étant disposée en vis-à-vis de et à une distance (H) de la surface (2a, 2b) à mesurer du ruban de verre, une dimension (D) caractéristique minimale de la surface (4a) inférieure étant telle que le rapport $\frac{D}{H}$ entre la dimension (D) caractéristique minimale et la distance (H) entre la surface (5) de référence et la surface (2a, 2b) à mesurer est inférieur à 1.

2.  Installation (100) de production de verre plat selon la revendication 1, dans laquelle l'installation (1) de mesure comprend un capteur (30) annexe de température, destiné à mesurer la température de l'environnement du capteur (3) de température du verre et dans laquelle l'installation (1) de mesure comprend de plus un module de correction de la température mesurée par le capteur (3) de température de verre par la température mesurée par le capteur (30) annexe.

3.  Installation (100) de production de verre plat selon la revendication 2, dans laquelle le capteur (30) annexe de température comprend au moins une surface (35) externe dite de référence annexe, les autres surfaces externes du capteur (30) annexe étant isolées thermiquement, le capteur (30) annexe étant équipé d'un dispositif de mesure de la température de sa surface (35) de référence annexe.

4.  Installation (100) de production de verre plat selon la revendication 3, dans laquelle une surface extérieure du capteur (30) annexe autre que la surface (35) de référence annexe est confondue avec une surface extérieure du capteur (3) de la température du verre autre que la surface (5) de référence, le capteur (3) de température du verre et le capteur (30) annexe formant un élément monobloc, la surface (35) de référence annexe étant orientée à l'opposé de la surface (5) de référence.

5.  Installation (100) de production de verre plat selon l'une quelconque des revendications précédentes, dans laquelle la surface (4a) inférieure comprend une ouverture (5a) débouchant dans un espace délimité par la surface (5) de référence de forme concave, tournée vers l'intérieur.

6.  Installation (100) de production de verre plat selon l'une quelconque des revendications précédentes, dans laquelle la dimension (D) caractéristique minimale est un diamètre de 20mm, la distance H entre la surface (5) de référence et la surface (2a, 2b) à mesurer du ruban (2) de verre étant supérieure à 20mm.

7.  Installation (100) de production de verre plat selon l'une quelconque des revendications précédentes, comprenant de plus un module de correction des pertes thermiques par conduction au sein du capteur (3) de température du verre.

8. Procédé de réglage d'une installation (1) de mesure en continu de la température d'une surface (2a, 2b) d'un ruban de verre (2) en défilement continu selon une direction longitudinale dans une installation (100) de production de verre plat selon l'une quelconque des revendications précédentes, le procédé comprenant les étapes suivantes, pour chaque capteur (3) de température du verre de l'installation (1) de mesure :

/1/ on détermine un seuil de précision acceptable pour la température mesurée par le capteur (3) de température du verre dans l'installation (100) de production ;

/2/ on dispose la surface (5) de référence du capteur (3) de température du verre en vis-à-vis d'une surface à mesurer d'un échantillon (E) représentatif du ruban (2) de verre, de manière à recevoir directement le rayonnement émis par la surface à mesurer de l'échantillon (E) ;

/3/ on établit la relation entre la température mesurée par le capteur (3) de température du verre et au moins deux paramètres de réglage du capteur (3) de température du verre en fixant, pour l'échantillon (E), l'un de ces paramètres et en faisant varier l'autre de ces paramètres, les deux paramètres étant :

◦ la distance (H) entre la surface (5) de référence du capteur (3) et la surface à mesurer ;
◦ la dimension (L) transversale d'une bande (B') affectée au capteur (3) de température du verre sur la surface à mesurer de l'échantillon (E), la température réelle de la bande (B') affectée au capteur (3) de température du verre étant connue, la température au-delà des bords longitudinaux de la bande (B') étant différente de la température réelle de la bande (B') ;

/4/ l'un des deux paramètres (H, L) de réglage du capteur (3) de température du verre étant fixé par l'installation (100) de production, on détermine à partir de la relation établie à l'étape /3/, en fonction du seuil de précision acceptable, l'autre de ces paramètres (H, L) ;

/5/ on met en place le capteur (3) de température du verre dans l'installation (100) de production de verre en transposant le paramètre (H, L) de réglage déterminé à l'étape /4/ pour l'échantillon (E) au ruban (2) de verre pour mesurer la température de la surface (2a, 2b) à mesurer du ruban (2) de verre.

9. Procédé selon la revendication 8, dans lequel la surface (2a, 2b) à mesurer du ruban (2) de verre au sein de l'installation (100) de production est virtuellement découpée en bandes de dimensions transversales fixées, chaque bande étant affectée à un capteur (3) de température du verre, et dans lequel, pour chaque capteur (3), le paramètre fixé étant la dimension (L) transversale d'une bande (B) affectée au capteur (3) de température du verre, le paramètre déterminé dans l'étape /4/ est la distance (H) entre la surface (5) de référence du capteur (3) et la surface à mesurer.

10. Procédé selon la revendication 8, dans lequel l'installation (1) de mesure comprend une pluralité de capteurs (3) de température du verre sensiblement sur un même plan perpendiculaire à la direction longitudinale, et dans lequel, pour chaque capteur (3) de température du verre, le paramètre fixé est la distance (H) entre la surface (5) de référence et la surface à mesurer, de sorte qu'il est déterminé à l'étape /4/ la dimension (L) transversale de la bande (B) affectée à chaque capteur (3) de température du verre, l'étape /5/ comprenant en plus une opération de détermination de la distance transversale entre deux capteurs adjacents (3) de température du verre dans ledit plan, cette distance étant au moins égale à somme des moitiés des dimensions transversales de la bande affectée à chacun des deux capteurs (3) de température du verre adjacents.

11. Procédé selon l'une quelconque des revendications 8 à 10, dans lequel l'installation (1) de mesure comprend de plus un capteur (30) annexe de température, destiné à mesurer la température de l'environnement du capteur (3) de température du verre, le procédé comprenant de plus une opération de correction de la température de la surface (2a, 2b) à mesurer du ruban (2) de verre mesurée par le capteur (3) de température du verre dans l'étape /5/ par la mesure de la température de l'environnement.

12. Procédé selon l'une quelconque des revendications 8 à 11, comprenant en outre un opération de correction de la température de la surface (2a, 2b) à mesurer du ruban (2) de verre mesurée par le capteur (3) de température du verre dans l'étape /5/ par la prise en compte des pertes thermiques par conduction au sein du capteur (3).

**Patentansprüche**

1. Anlage (100) zum Herstellen von Flachglas wie ein Zinnbad oder ein Kühlofen, umfassend eine Anlage (1) zum kontinuierlichen Messen der Temperatur einer Oberfläche (2a, 2b) eines Glasbandes (2) in kontinuierlicher Bewegung in einer Längsrichtung in der Herstellungsanlage (100), die Messanlage (1) umfassend mindestens einen Glastemperatursensor (3), wobei der Sensor (3) eine äußere untere Oberfläche (4a) aufweist, auf der mindestens eine sogenannte Referenzoberfläche (5) ausgebildet ist, wobei die äußeren Oberflächen (4) des Sensors (3) außer der Referenzoberfläche (5) thermisch isoliert sind, wobei der Glastemperatursensor (3) mit einer Vorrichtung (6) zum Messen der Temperatur seiner Referenzoberfläche (5) ausgestattet ist, wobei die Referenzoberfläche (5) gegenüber und in einem Abstand (H) von der zu messenden Oberfläche (2a, 2b) des Glasbandes angeordnet ist, wobei eine minimale charakteristische Abmessung (D) der unteren Oberfläche (4a) so ist,

$$\frac{D}{H}$$

dass das Verhältnis $\frac{D}{H}$ zwischen der minimalen charakteristischen Abmessung (D) und dem Abstand (H) zwischen der Referenzoberfläche (5) und der zu messenden Oberfläche (2a, 2b) kleiner als 1 ist.

2. Anlage (100) zum Herstellen von Flachglas nach Anspruch 1, wobei die Messanlage (1) einen Nebentemperatursensor (30) umfasst, der dazu bestimmt ist, die Temperatur der Umgebung des Glastemperatursensors (3) zu messen, und wobei die Messanlage (1) zusätzlich ein Modul zum Korrigieren der Temperatur, die durch den Glastemperatursensor (3) gemessen wird, durch die Temperatur umfasst, die durch den Nebensensor (30) gemessen wird.

3. Anlage (100) zum Herstellen von Flachglas nach Anspruch 2, wobei der Nebentemperatursensor (30) mindestens eine äußere sogenannte Nebenreferenzoberfläche (35) umfasst, wobei die anderen äußeren Oberflächen des Nebensensors (30) thermisch isoliert sind, wobei der Nebensensor (30) mit einer Vorrichtung zum Messen der Temperatur seiner Nebenreferenzoberfläche (35) ausgestattet ist.

4. Anlage (100) zum Herstellen von Flachglas nach Anspruch 3, wobei eine äußere Oberfläche des Nebensensors (30) außer der Nebenreferenzoberfläche (35) mit einer äußeren Oberfläche des Glastemperatursensors (3) außer der Referenzoberfläche (5) zusammenfällt, wobei der Glastemperatursensor (3) und der Nebensensor (30) ein einstückiges Element ausbilden, wobei die Nebenreferenzoberfläche (35) gegenüber der Referenzoberfläche (5) ausgerichtet ist.

5. Anlage (100) zum Herstellen von Flachglas nach einem der vorstehenden Ansprüche, wobei die untere Oberfläche (4a) eine Öffnung (5a) umfasst, die in einen Raum mündet, der durch die Referenzoberfläche (5) mit konkaver Form begrenzt wird, die nach innen gewandt ist.

6. Anlage (100) zum Herstellen von Flachglas nach einem der vorstehenden Ansprüche, wobei die minimale charakteristische Abmessung (D) ein Durchmesser von 20 mm ist, der Abstand H zwischen der Referenzoberfläche (5) und der zu messenden Oberfläche (2a, 2b) des Glasbandes (2) größer als 20 mm ist.

7. Anlage (100) zum Herstellen von Flachglas nach einem der vorstehenden Ansprüche, ferner umfassend ein Modul zum Korrigieren von Wärmeverlusten durch Übertragung innerhalb des Glastemperatursensors (3).

8. Verfahren zum Einstellen einer Anlage (1) zum kontinuierlichen Messen der Temperatur einer Oberfläche (2a, 2b) eines Glasbandes (2) in kontinuierlicher Bewegung in einer Längsrichtung in einer Anlage (100) zum Herstellen von Flachglas nach einem der vorstehenden Ansprüche,
das Verfahren umfassend für jeden Glastemperatursensor (3) der Messanlage (1) die folgenden Schritte:

/1/ Bestimmen einer akzeptablen Präzisionsschwelle für die Temperatur, die durch den Glastemperatursensor (3) in der Herstellungsanlage (100) gemessen wird;
121 Anordnen der Referenzoberfläche (5) des Glastemperatursensors (3) gegenüber einer zu messenden Oberfläche einer Probe (E), die das Glasband (2) darstellt, um die Strahlung, die durch die zu messende Oberfläche der Probe (E) emittiert wird, direkt aufzunehmen;
/3/ Erstellen der Beziehung zwischen der Temperatur, die durch den Glastemperatursensor (3) gemessen wird, und mindestens zwei Einstellparametern des Glastemperatursensors (3), indem für die Probe (E) einer dieser Parameter festgelegt wird und der andere dieser Parameter variiert wird, wobei die zwei Parameter sind:

o der Abstand (H) zwischen der Referenzoberfläche (5) des Sensors (3) und der zu messenden Oberfläche;
o die Querabmessung (L) eines Bandes (B'), das dem Glastemperatursensor (3) zugeordnet ist, auf der zu messenden Oberfläche der Probe (E), wobei die tatsächliche Temperatur des Bandes (B'), das dem Glastemperatursensor (3) zugeordnet ist, bekannt ist, wobei die Temperatur jenseits der Längskanten des Bandes (B') von der tatsächlichen Temperatur des Bandes (B') abweicht;

141 wobei einer der zwei Parameter (H, L) zum Einstellen des Glastemperatursensors (3) durch die Herstellungsanlage (100) festgelegt wird, Bestimmen aus der Beziehung, die in Schritt /3/ erstellt wird, in Abhängigkeit von der akzeptablen Präzisionsschwelle, des anderen dieser Parameter (H, L);

/5/ Platzieren des Glastemperatursensors (3) in der Glasproduktionsanlage (100), indem der Einstellparameter (H, L), der in Schritt 141 bestimmt wird, für die Probe (E) auf das Glasband (2) zum Messen der Temperatur der zu messenden Oberfläche (2a, 2b) des Glasbandes (2) übertragen wird.

9.  Verfahren nach Anspruch 8, wobei die zu messende Oberfläche (2a, 2b) des Glasbandes (2) innerhalb der Herstellungsanlage (100) virtuell in Bänder mit festen Querabmessungen geschnitten wird, wobei jedem Band ein Glastemperatursensor (3) zugeordnet wird, und wobei für jeden Sensor (3) der festgelegte Parameter die Querabmessung (L) eines Bandes (B) ist, das dem Glastemperatursensor (3) zugeordnet ist, wobei der Parameter, der in Schritt 141 bestimmt wird, der Abstand (H) zwischen der Referenzoberfläche (5) des Sensors (3) und der zu messenden Oberfläche ist.

10. Verfahren nach Anspruch 8, wobei die Messanlage (1) eine Vielzahl von Glastemperatursensoren (3) umfasst, die sich im Wesentlichen auf einer gleichen Ebene senkrecht zu der Längsrichtung befinden, und wobei für jeden Glastemperatursensor (3) der festgelegte Parameter der Abstand (H) zwischen der Referenzoberfläche (5) und der zu messenden Oberfläche ist, so dass in Schritt 141 die Querabmessung (L) des Bandes (B), das jedem Glastemperatursensor (3) zugeordnet ist, bestimmt wird, Schritt /5/ umfassend zusätzlich einen Vorgang des Bestimmens des Querabstands zwischen zwei benachbarten Glastemperatursensoren (3) in der Ebene, wobei dieser Abstand mindestens gleich der Summe der Hälften der Querabmessungen des Bandes ist, das jeweils den zwei benachbarten Glastemperatursensoren (3) zugeordnet ist.

11. Verfahren nach einem der Ansprüche 8 bis 10, wobei die Messanlage (1) zusätzlich einen Nebentemperatursensor (30) umfasst, der dazu bestimmt ist, die Temperatur der Umgebung des Glastemperatursensors (3) zu messen, das Verfahren umfassend zusätzlich einen Vorgang zum Korrigieren der Temperatur der zu messenden Oberfläche (2a, 2b) des Glasbandes (2), die durch den Glastemperatursensor (3) in Schritt /5/ gemessen wird, durch die Messung der Umgebungstemperatur.

12. Verfahren nach einem der Ansprüche 8 bis 11, umfassend ferner einen Vorgang zum Korrigieren der Temperatur der zu messenden Oberfläche (2a, 2b) des Glasbandes (2), die durch den Glastemperatursensor (3) in Schritt /5/ gemessen wird, durch Berücksichtigung von Wärmeverlusten durch Übertragung innerhalb des Sensors (3).

## Claims

1.  An apparatus (100) for producing flat glass, such as a tin bath or an annealing lehr, comprising an apparatus (1) for continuously measuring the temperature of a surface (2a, 2b) of a glass ribbon (2) moving continuously in a longitudinal direction inside the production apparatus (100), the measuring apparatus (1) comprising at least one glass temperature sensor (3), said sensor (3) having an external lower surface (4a) on which at least one so-called reference surface (5) is formed, the external surfaces (4) of the sensor (3) other than the reference surface (5) being thermally insulated, the glass temperature sensor (3) being fitted with a device (6) for measuring the temperature of its reference surface (5), the reference surface (5) being arranged opposite and at a distance (H) from the surface (2a, 2b) to be measured of the glass ribbon, a minimum characteristic dimension (D) of the lower surface (4a) being such that the ratio $\frac{D}{H}$ between the minimum characteristic dimension (D) and the distance (H) between the reference surface (5) and the surface (2a, 2b) to be measured is less than 1.

2.  The flat glass production apparatus (100) according to claim 1, wherein the measuring apparatus (1) comprises an auxiliary temperature sensor (30) for measuring the temperature of the environment of the glass temperature sensor (3) and wherein the measuring apparatus (1) further comprises a module for correcting the temperature measured by the glass temperature sensor (3) using the temperature measured by the auxiliary sensor (30).

**3.** The flat glass production apparatus (100) according to claim 2, wherein the auxiliary temperature sensor (30) comprises at least one external so-called auxiliary reference surface (35), the other external surfaces of the auxiliary sensor (30) being thermally insulated, the auxiliary sensor (30) being fitted with a device for measuring the temperature of its auxiliary reference surface (35).

**4.** The flat glass production apparatus (100) according to claim 3, wherein an outer surface of the auxiliary sensor (30) other than the auxiliary reference surface (35) coincides with an outer surface of the glass temperature sensor (3) other than the reference surface (5), the glass temperature sensor (3) and the auxiliary sensor (30) forming an integral element, the auxiliary reference surface (35) facing away from the reference surface (5).

**5.** The flat glass production apparatus (100) according to any of the preceding claims, wherein the lower surface (4a) comprises an opening (5a) leading into a space delimited by the concave reference surface (5), facing inwards.

**6.** The flat glass production apparatus (100) according to any of the preceding claims, wherein the minimum characteristic dimension (D) is a diameter of 20 mm, the distance H between the reference surface (5) and the surface (2a, 2b) to be measured of the glass ribbon (2) being greater than 20 mm.

**7.** The flat glass production apparatus (100) according to any of the preceding claims, further comprising a module for correcting conductive heat losses within the glass temperature sensor (3).

**8.** A method for adjusting an apparatus (1) for continuously measuring the temperature of a surface (2a, 2b) of a glass ribbon (2) moving continuously in a longitudinal direction inside a flat glass production apparatus (100) according to any of the preceding claims,
the method comprising the following steps for each glass temperature sensor (3) of the measuring apparatus (1):

/1/ determining an acceptable accuracy threshold for the temperature measured by the glass temperature sensor (3) in the production apparatus (100);
121 arranging the reference surface (5) of the glass temperature sensor (3) opposite a surface to be measured of a sample (E) which is representative of the glass ribbon (2), so as to directly receive the radiation emitted by the surface to be measured of the sample (E);
/3/ establishing the relationship between the temperature measured by the glass temperature sensor (3) and at least two adjustment parameters for the glass temperature sensor (3) by fixing, for the sample (E), one of these parameters and varying the other of these parameters, the two parameters being:

∘ the distance (H) between the reference surface (5) of the sensor (3) and the surface to be measured;
∘ the transverse dimension (L) of a strip (B') assigned to the glass temperature sensor (3) on the surface to be measured of the sample (E), the actual temperature of the strip (B') assigned to the glass temperature sensor (3) being known, the temperature beyond the longitudinal edges of the strip (B') being different from the actual temperature of the strip (B');

141 with either of the two adjustment parameters (H, L) for the glass temperature sensor (3) being fixed by the production apparatus (100), determining the other of these parameters (H, L) from the relationship established in step /3/ on the basis of the acceptable accuracy threshold;
/5/ placing the glass temperature sensor (3) in the glass production apparatus (100) by transposing the adjustment parameter (H, L) determined in step /4/ for the sample (E) to the glass ribbon (2) in order to measure the temperature of the surface (2a, 2b) to be measured of the glass ribbon (2).

**9.** The method according to claim 8, wherein the surface (2a, 2b) to be measured of the glass ribbon (2) within the production apparatus (100) is virtually cut into strips of fixed transverse dimensions, each strip being assigned to a glass temperature sensor (3), and wherein, for each sensor (3), the fixed parameter being the transverse dimension (L) of a strip (B) assigned to the glass temperature sensor (3), and the parameter determined in step 141 is the distance (H) between the reference surface (5) of the sensor (3) and the surface to be measured.

**10.** The method according to claim 8, wherein the measuring apparatus (1) comprises a plurality of glass temperature sensors (3) substantially on the same plane perpendicular to the longitudinal direction, and wherein, for each glass temperature sensor (3), the fixed parameter is the distance (H) between the reference surface (5) and the surface to be measured, such that in step 141 the transverse dimension (L) of the strip (B) assigned to each glass temperature sensor (3) is determined, with step /5/ further comprising an operation of determining the transverse distance between two adjacent glass temperature sensors (3) in said plane, this distance being at least equal to the sum of the halves of the transverse dimensions of the strip assigned to each of the two adjacent glass temperature sensors (3).

11. The method according to any of claims 8 to 10, wherein the measuring apparatus (1) further comprises an auxiliary temperature sensor (30) for measuring the temperature of the environment of the glass temperature sensor (3), the method further comprising an operation of correcting the temperature of the surface (2a, 2b) to be measured of the glass ribbon (2) which is measured by the glass temperature sensor (3) in step /5/ by measuring the temperature of the environment.

12. The method according to any of claims 8 to 11, further comprising an operation of correcting the temperature of the surface (2a, 2b) to be measured of the glass ribbon (2) which is measured by the glass temperature sensor (3) in step /5/ by taking into account conductive heat losses within the sensor (3).

101

102

1A

1D          1C

1B          1E

2

Figure 1

4b

6          9          3

4c

4a     5a     5

D

Figure 2

Figure 3

Figure 4

Figure 5

Figure 6

Figure 7

Figure 8

Figure 9

Figure 10

Figure 11

EP 3 426 613 B1

Figure 12

Largeur L

Figure 13

Figure 14

## RÉFÉRENCES CITÉES DANS LA DESCRIPTION

**Documents brevets cités dans la description**

- FR 2897054
- WO 2008000939 A
- US 4185982 A

**Littérature non-brevet citée dans la description**

- **R. GARDON.** The emissivity of transparent materials. *Journal of the American Ceramic Society,* Août 1956, vol. 39 (8), 278-287
- **SIEGEL ; HOWELL.** Thermal Radiation Heat Transfer. CRC Press, 2001